# EUROPÄISCHE PATENTSCHRIFT

(11) **EP 3 423 314 B1**
(45) Veröffentlichungstag und Bekanntmachung des Hinweises auf die Patenterteilung: **06.11.2019**
(21) Anmeldenummer: 16819816.6
(22) Anmeldetag: 08.12.2016
(51) Int. Cl.: B60R 21/38

(54) **KLAPPENSCHARNIER FÜR EINE FRONTKLAPPE EINES FAHRZEUGS MIT EINEM TELESKOPIERBAREN LENKERHEBEL**
HINGE FOR A BONNET OF A VEHICLE, HAVING A TELESCOPIC CONTROL LEVER
CHARNIÈRE POUR OUVRANT, DESTINÉE AU CAPOT AVANT D'UN VÉHICULE, DOTÉE D'UN LEVIER DE GUIDAGE TÉLESCOPIQUE

(30) Priorität: 01.03.2016 DE 102016002524
(43) Veröffentlichungstag der Anmeldung: 09.01.2019
(73) Patentinhaber: Audi AG, 85045 Ingolstadt (DE)
(72) Erfinder: GABLER, Ivo, 85107 Baar-Ebenhausen (DE)
(86) Internationale Anmeldenummer: PCT/EP2016/002070
(87) Internationale Veröffentlichungsnummer: WO 2017/148495

(56) Entgegenhaltungen:
- DE-A1- 10 136 340
- DE-U1-202015 006 895

## Beschreibung

Die Erfindung betrifft ein Klappenscharnier für eine Frontklappe eines Fahrzeugs mit einem teleskopierbaren Lenkerhebel und einem Hubaktuator, welcher im Fall einer drohenden Kollision mit einem Fußgänger aus Gründen des Fußgängerschutzes die Frontklappe anhebt, um dadurch die Bewegungsenergie eines von der Frontklappe aufgefangenen Fußgängers abzubauen.

Aus der DE 2009 040 398 A1 ist ein Klappenscharnier für eine Fahrzeugklappe mit Fußgängerschutz bekannt, welches ein Scharnierunterteil zur Anbindung an eine Fahrzeugkarosserie und ein Scharnieroberteil zur Anbindung an die Fahrzeugklappe sowie Lenkerhebel zur Verbindung des Scharnierunterteils mit dem Scharnieroberteil umfasst, wobei an dem Klappenscharnier ein Hubaktuator zum Anheben des Scharnieroberteils beweglich gelagert und mittels eines lösbaren Fixierelementes in seiner Bewegung relativ zu dem Scharnier gehindert ist. Dieses Fixierelement löst sich von dem Hubaktuator, wenn das Klappenscharnier über seine Ruhestellung hinaus zusammengedrückt wird. Im aktiven Aufprallfall, bei dem der Hubaktuator ausgelöst wird, fixiert das Fixierelement den Hubaktuator, so dass ein Hub des Hubaktuators zur Anhebung der Fahrzeugklappe genutzt werden kann. Im passiven Aufprallfall, bei dem der Hubaktuator nicht ausgelöst, jedoch das Scharnier zusammengedrückt wird, löst sich das Fixierelement von dem Hubaktuator, der dadurch nicht mehr in seiner Verschiebbarkeit gehindert und der somit durch die aufgrund des Aufpralls ausgeübten Kraft nachgeben und entsprechend abtauchen kann. Somit kann der Hubaktuator den Deformationsweg der Fahrzeugklappe nicht mehr behindern.

Nach einem aktiven Aufprall, bei dem der Wegaktuator ausgelöst wurde und die Motorhaube hochgestellt ist, kann der Fahrer nur mit eingeschränkter Sicht weiterfahren. Daher schlägt die DE 10 2009 040 413 A1 vor, bei einem Klappenscharnier für eine Fahrzeugklappe mit Fußgängerschutz und einem Wegaktuator ein Verbindungsmittel vorzusehen, mit welchem eine lösbare und wieder verbindbare Kopplung zwischen einem oberen Scharnieroberteil und einem unteren Scharnieroberteil realisierbar ist, wodurch die Motorhaube nach einem Aufstellen wieder in ihre ursprüngliche Lage zurückbewegt und in dieser Lage mittels diesem Verbindungsmittel fixiert werden kann.

Auch die DE 10 2005 039 908 B4 sowie die DE 103 23 118 A1 behandeln das Problem des Reversierens einer aufgestellten Frontklappe eines Fahrzeugs, wenn das Aufstellen der Frontklappe nicht durch einen Aufprall einer Person ausgelöst wurde. In einem solchen Fall muss es möglich sein, den Aktuator, welcher das Klappenscharnier aufgestellt hat, in den Ausgangszustand zurückzudrücken oder zurückzuziehen. Ausgehend von einer gemäß der DE 103 23 118 A1 beschriebenen manuellen Reversier-Einrichtung mit einem teleskopierbaren Zugstab offenbart die DE 10 2005 039 909 B4 eine verbesserte Reversier-Einrichtung. Der teleskopierbare Zugstab bei diesen Reversier-Einrichtungen dient dazu, im vollständig ausgezogenen Zustand zum Reversieren des Aktuators einen Drehpunkt mit der Frontklappe zu bilden, so dass die Frontklappe bezüglich dieses Drehpunktes einen zweiarmigen Hebel bildet. Damit kann über die Frontklappe eine Reversierkraft erzeugt werden, mit welcher das Klappenscharnier in seine Ausgangslage zurückgedrückt wird. Der teleskopierbare Zugstab dient damit als Reversier-Element.

Ein weiteres Klappenscharnier für die Frontklappe eines Fahrzeugs mit einem Scharnierunterteil zur Anbindung an eine Fahrzeugkarosserie, einem Scharnieroberteil zur Anbindung an die Frontklappe, und einem das Scharnierunterteil mit dem Scharnieroberteil verbindenden ersten und zweiten Lenkerhebel ist aus dem Dokument DE 20 2015006895 U1 bekannt.

Es ist Aufgabe der Erfindung ein gegenüber dem Stand der Technik verbessertes Klappenscharnier für eine Frontklappe eines Fahrzeugs mit einem Hubaktuator anzugeben.

Diese Aufgabe wird gelöst durch ein Klappenscharnier mit den Merkmalen des Patentanspruchs 1.

Gemäß der Erfindung wird ein Klappenscharnier für eine Frontklappe eines Fahrzeugs realisiert, mit
- einem Scharnierunterteil zur Anbindung an eine Fahrzeugkarosserie,
- einem Scharnieroberteil zur Anbindung an die Frontklappe,
- einem das Scharnierunterteil mit dem Scharnieroberteil verbindenden ersten und zweiten Lenkerhebel, wobei der erste Lenkerhebel teleskopierbar mit einem ersten und zweiten Teilhebel ausgebildet ist,
- einem Verriegelungselement zur Verriegelung der Teleskopfunktion des ersten Lenkerhebels, welches verschwenkbar zwischen einer Verriegelungsposition, in welcher der erste und zweite Teilhebel im nichtteleskopierten Zustand verriegelt sind, und einer das Teleskopieren des ersten und zweiten Teilhebels ermöglichenden Freigabeposition ausgebildet ist,
- einem Entriegelungsmittel zum Verschwenken des Verriegelungselements aus der Verriegelungsposition in die Freigabeposition, und
- einem Hubaktuator, welcher ausgebildet ist durch eine Aktivierung ein Anheben des Scharnieroberteils gegenüber dem Scharnierunterteil und eine Betätigung des Entriegelungsmittels zu bewirken.

Dieses erfindungsgemäße Klappenscharnier zeichnet sich durch einen einfachen konstruktiven Aufbau aus, da die Verstellung der Frontklappe eines Fahrzeugs in eine Fußgängerschutzposition über die entriegelte Teleskopfunktion des ersten Lenkerhebels erfolgt, während zum normalen Aufstellung der Frontklappe die Teleskopfunktion verriegelt ist. Die Verstellung der Frontklappe in die Fußgängerschutzposition erfolgt mittels eines aktivierten Hubaktuators, welcher zum einen ein Anheben des Scharnieroberteils gegenüber dem Scharnierunterteil und zum anderen eine Entriegelung der Teleskopfunktion des ersten Lenkerhebels bewirkt. Damit entfällt eine aufwändige Mechanik zur Entriegelung der Teleskopfunktion des ersten Lenkerhebels.

Nach einer vorteilhaften Ausgestaltung der Erfindung sind der erste Teilhebel des ersten Lenkerhebels und das Verriegelungselement mittels einer gemeinsamen Schwenkachse mit dem Scharnierunterteil schwenkverbunden.

Nach einer weiteren besonders bevorzugten Weiterbildung der Erfindung ist der erste Teilhebel als Führungsschiene mit an den Querschnitt des zweiten Teilhebels angepassten U-förmigen Querschnitt ausgebildet, wobei der erste und zweite Teilhebel jeweils ein Langloch sowie einen Führungszapfen aufweisen, derart dass unter Führung des zweiten Teilhebels in dem als Führungsschiene ausgebildeten ersten Teilhebel jeweils wechselseitig ein Führungszapfen in ein Langloch eingreift.

Gemäß einer weiteren vorteilhaften Ausgestaltung der Erfindung ist das Entriegelungsmittel als in dem Scharnierunterteil schwenkbar zwischen einer federvorgespannten Ruhestellung und einer Entriegelungsstellung gelagerten Entriegelungshebel ausgebildet, welcher mit einem Ende derart mit dem Verriegelungselement wirkverbunden ist, dass beim Verschwenken aus der Ruhelage in die Entriegelungsstellung das Verriegelungselement aus der Verriegelungsposition in die Freigabeposition verschwenkt wird.

Eine weitere vorteilhafte Ausgestaltung der Erfindung sieht vor, dass das Verriegelungselement ein Verriegelungshebel ist, welcher einenends mit einem Verriegelungshaken und andernends mit einem Kopplungsarm zur Herstellung der Wirkverbindung mit dem Entriegelungshebel ausgebildet ist, wobei zur Verriegelung der Teleskopfunktion des ersten Lenkerhebels dessen zweiter Teilhebel einen mit dem Verriegelungshaken in Wirkverbindung bringbaren Sperrzapfen aufweist. Vorzugsweise ist der Hubaktuator derart mit dem anderen Ende des Entriegelungshebels wirkverbunden, dass durch die Aktivierung des Hubaktuators der Entriegelungshebel aus der Ruhestellung in die Entriegelungsstellung verschwenkt wird.

Zudem gibt sich eine weitere vorteilhafte Ausgestaltung der Erfindung, wenn die Wirkverbindung zwischen dem Hubaktuator und dem Entriegelungshebel mittels eines in dem Scharnierunterteil aus einer federvorgespannten Ruheposition gegen die Federspannung in eine Aktivposition verschiebbar gelagerten Lagerelementes hergestellt ist, wobei die Ruheposition mit der Ruhestellung des Entriegelungshebels und die Aktivposition mit der Entriegelungsstellung des Entriegelungshebels korrespondiert. Vorzugsweise weist das Scharnierunterteil ein Langloch auf, in welchem das Lagerelement zwischen der Ruheposition und der Aktivposition verschiebbar gelagert ist.

Besonders vorteilhaft ist es, wenn gemäß einer Ausgestaltung der Erfindung der Hubaktuator in einem Aktuatorhalter verschiebbar gelagert ist, wobei der Aktuatorhalter an dem Scharnierunterteil angeordnet ist. Hierbei ist vorzugsweise der Hubaktuator aus einem Aktuatorgehäuse mit einem aus dem Aktuatorgehäuse ausfahrbaren Aktuatorstößel ausgebildet ist. Das Aktuatorgehäuse des Hubaktuators ist mit dem Lagerelement verbunden.

Schließlich ist weiterbildungsgemäß der Hubaktuator als pyrotechnischer Aktor ausgebildet.

Die Erfindung wird nachfolgend anhand eines Ausführungsbeispiels unter Bezugnahme auf die beigefügten Figuren ausführlich beschrieben. Es zeigen:
- Figur 1: eine schematische und perspektivische Darstellung eines Klappenscharniers eines Fahrzeugs mit einer Sicht auf einen ersten und zweiten Lenkerhebel gemäß der Erfindung,
- Figur 2: eine schematische und perspektivische Darstellung des Klappenscharniers nach Figur 1 mit einer Sicht auf einen Hubaktuator,
- Figur 3: eine schematische Darstellung des Klappenscharniers nach Figur 1 im geöffneten Zustand,
- Figur 4: eine schematische Darstellung des Klappenscharniers nach Figur 1 in einer Fußgängerschutzposition mit einer Sicht auf den ersten und zweiten Lenkerhebel,
- Figur 5: eine schematische Explosionsdarstellung des ersten Lenkerhebels des Klappenscharniers gemäß den Figuren 1 bis 4,
- Figur 6: eine schematische Detaildarstellung im Bereich der Schwenkachse des ersten Lenkerhebels des Klappenscharniers gemäß den Figuren 1 bis 5,
- Figur 7: eine schematische Detaildarstellung der Halterung des Hubaktuators an dem Scharnierunterteil des Klappenscharniers, und
- Figur 8: eine schematische und perspektivische Detaildarstellung der schwimmenden Lagerung des Hubaktuators an dem Scharnierunterteil des Klappenscharniers.

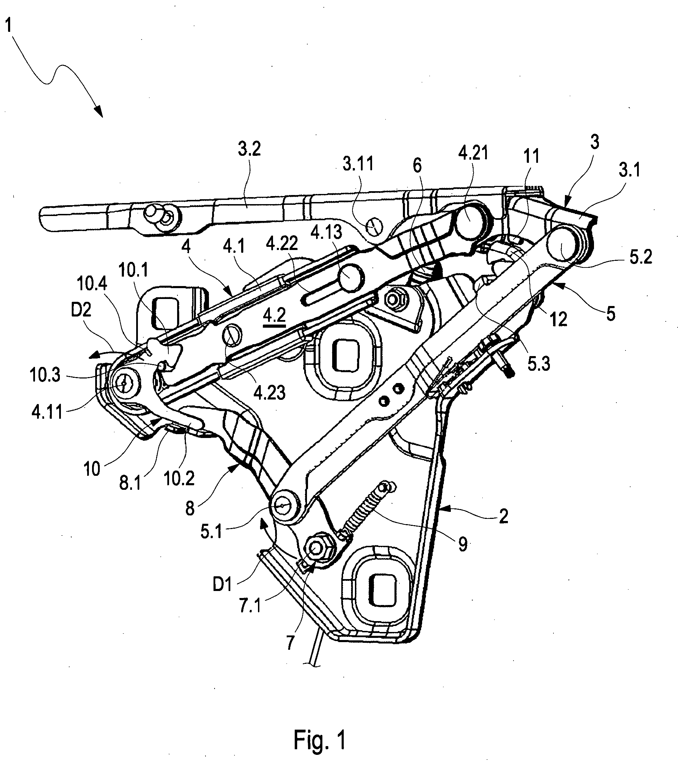

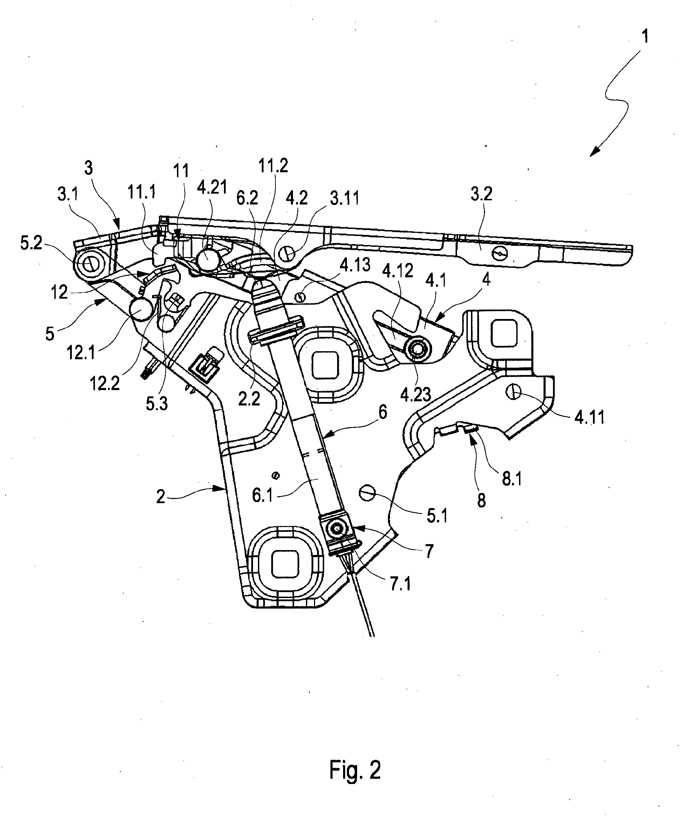

Die Figuren 1 und 2 zeigen ein Klappenscharnier 1 für eine Frontklappe (nicht dargestellt) eines Fahrzeugs, welches aus einem Scharnierunterteil 2 als mit einer Fahrzeugkarosserie des Fahrzeug verbundenen Scharniergrundplatte und einem mit demselben über einen ersten Lenkerhebel 4 und einen zweiten Lenkerhebel 5 schwenkverbundenen Scharnieroberteil 3 aufgebaut ist. Das Scharnieroberteil 3 besteht aus einem unteren Scharnieroberteil 3.1, an welchem der erste Lenkerhebel 4 und der zweite Lenkerhebel 5 angelenkt sind, und einem mit dem unteren Scharnieroberteil 3.1 schwenkverbundenen oberen Scharnieroberteil 3.2, welches mit der Frontklappe verbunden ist.

Die Figur 1 zeigt diejenige Seite des Klappenscharniers 1 mit Sicht auf den ersten und den zweiten Lenkerhebel 4 und 5 und die Figur 2 zeigt die gegenüberliegende Seite mit Sicht auf einen pyrotechnisch auslösenden Hubaktuator 6. Die Aktivierung dieses Hubaktuators 6 führt zum Anheben des Scharnieroberteils 3, wodurch die Frontklappe in eine Fußgängerschutzposition verlagert wird.

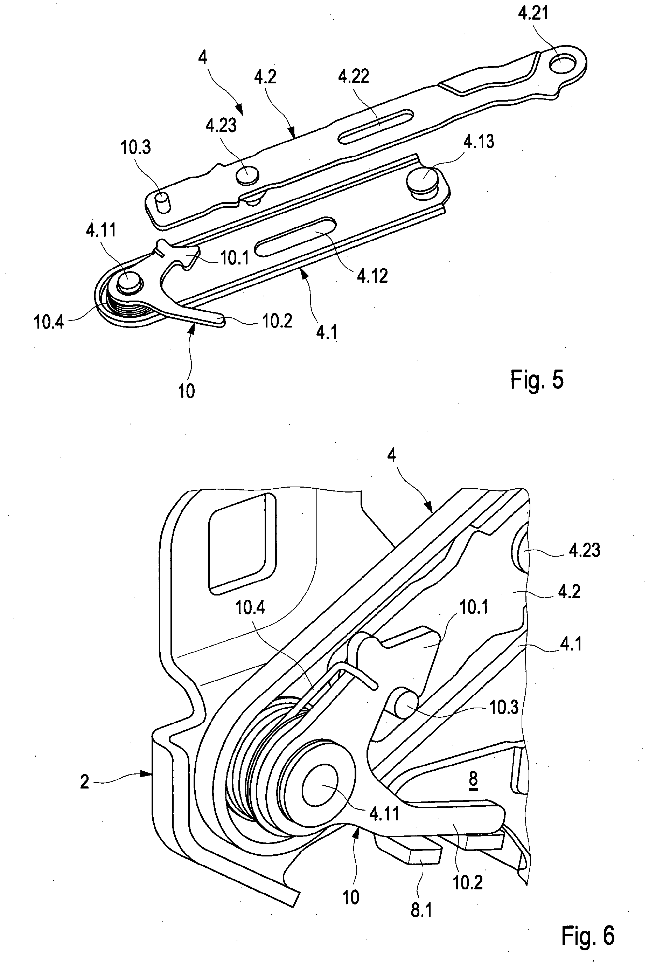

Der erste Lenkerhebel 4 ist teleskopierbar mittels eines ersten Teilhebels 4.1 und einem zweiten Teilhebel 4.2 ausgeführt. Hierzu ist gemäß Figur 5 der erste Teilhebel 4.1 als Führungsschiene mit einem U-förmigen Querschnitt ausgeführt, in welchem der zweite Teilhebel 4.2 geführt ist. Die Teleskopverbindung der beiden Teilhebel 4.1 und 4.2 wird mittels in beiden Teilen jeweils vorgesehenen Langlöchern 4.12 und 4.22 und als Stufennieten ausgeführten Führungszapfen 4.13 und 4.23 realisiert, wobei wechselseitig ein Führungszapfen 4.13 bzw. 4.23 eines Teilhebels 4.1 bzw. 4.2 in ein Langloch 4.22 bzw. 4.12 des anderen Teilhebels 4.2 bzw. 4.1 greift. Der erste Teilhebel 4.1 ist an einem Ende mittels einer Schwenkachse 4.11 zusammen mit einem Verriegelungselement 10 zwischen einer Verriegelungsposition und einer Freigabeposition schwenkbar in dem Scharnierunterteil 2 gelagert, während der zweite Teilhebel 4.2 mittels einer weiteren Schwenkachse 4.21 schwenkbar mit dem unteren Scharnieroberteil 3.1 schwenkverbunden ist.

Der zweite Lenkerhebel 5 ist mit einem Ende zusammen mit einem Entriegelungshebel 8 als Entriegelungsmittel mittels einer Schwenkachse 5.1 in dem Scharnierunterteil 2 schwenkbar gelagert, während das andere Ende dieses zweiten Lenkerhebels 5 über eine weitere Schwenkachse 5.2 schwenkbar mit dem unteren Scharnieroberteil 3.1 schwenkverbunden ist. Das untere Scharnieroberteil 3.1 weist eine weitere Schwenkachse 3.11 auf, die eine Schwenkverbindung mit dem oberen Scharnieroberteil 3.2 herstellt. Diese Schwenkverbindung wird mittels einem weiteren Verriegelungselement 11 verriegelt und wird nur dann mittels des aktivierten Hubaktuators 6 entriegelt, um das Scharnieroberteil 3 in eine der Fußgängerschutzposition der Frontklappe entsprechenden Position anzuheben.

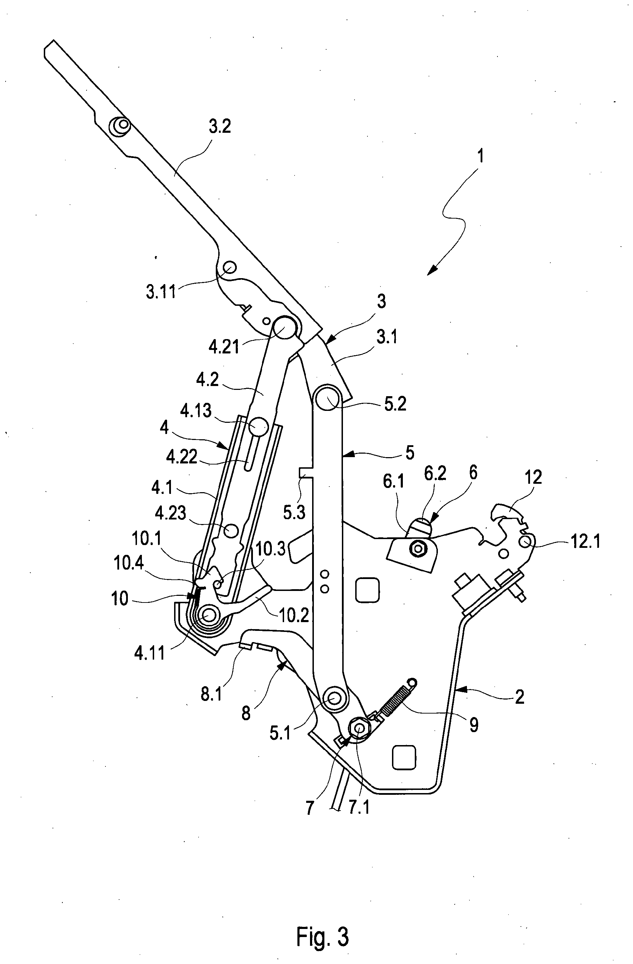

Aus der in den Figuren 1 und 2 gezeigten Schließstellung des Klappenscharniers 1 wird es zum manuellen Öffnen der Frontklappe in eine Offenstellung gemäß Figur 3 bewegt. Hierzu werden die beiden Lenkerhebel 4 und 5 um die Schwenkachsen 4.11, 4.21, 5.1 und 5.2 in die Positionen gemäß Figur 3 verschwenkt, wobei die Teleskopfunktion des ersten Lenkerhebels 4 mittels des Verriegelungselementes 10 verriegelt ist, d.h. das Verriegelungselement 10 verbleibt in seiner Verriegelungsposition. In dieser Verriegelungsposition des Verriegelungselements 10 können die beiden Teilhebel 4.1 und 4.2 nicht auseinandergezogen werden. Auch die Verriegelung der Schwenkbewegung des oberen Scharnieroberteils 3.2 gegenüber dem unteren Scharnieroberteil 3.1 bleibt bestehen.

Dieses Verriegelungselement 10 für die Teleskopfunktion des ersten Lenkerhebels 4 ist als 2-seitiger Winkelhebel ausgeführt, wobei ein Ende des Verriegelungselements 10 einen Verriegelungshaken 10.1 und das andere Ende des Verriegelungselements 10 als Kopplungsarm 10.2 ausgebildet ist, mit welchem eine Kopplung mit dem Entriegelungshebel 8 hergestellt wird. Um die Teleskopfunktion des ersten Lenkerhebels 4 zu verriegeln, weist der zweite Teilhebel 4.2 des ersten Lenkerhebels 4 einen Sperrzapfen 10.3 auf, in welchen der Verriegelungshaken 10.1 des Verriegelungselements 10 in seiner Verriegelungsposition eingreift. In dieser Verriegelungsposition ist das Verriegelungselement 10 mittels eines Federelementes 10.4 (vgl. Figuren 5 und 6) vorgespannt. Während der Bewegung des Klappenscharniers 1 aus der Schließstellung gemäß den Figuren 1 und 2 in die Offenstellung gemäß Figur 3 bleibt die Teleskopfunktion des ersten Lenkerhebels 4 verriegelt, d.h. dass der Verriegelungshaken 10.1 den Sperrzapfen 10.3 umgreift, wie dies besonders Figur 6 ersichtlich ist.

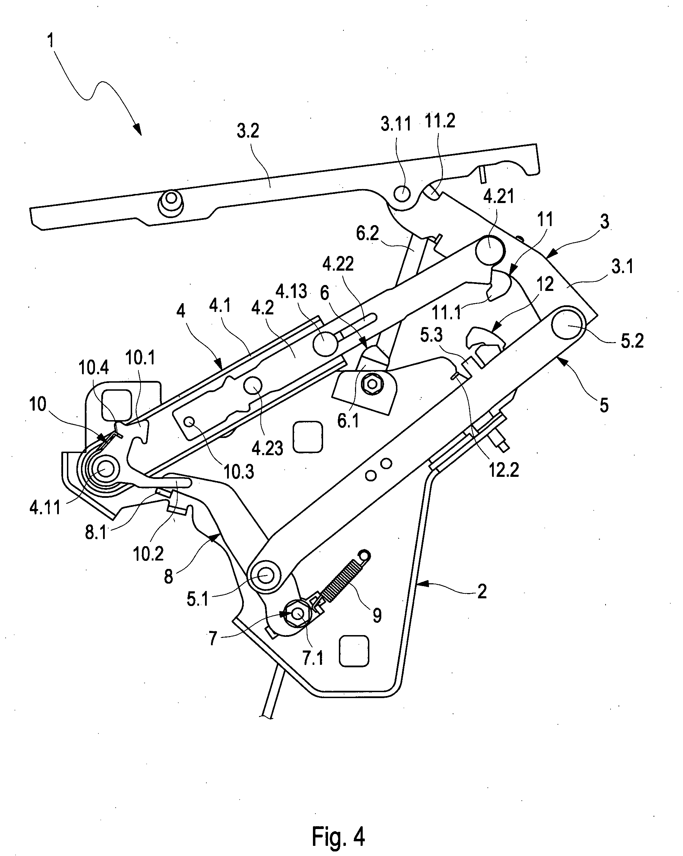

Bei einer Aktivierung des Hubaktuators 6 wird das Scharnieroberteil 3 in eine Position gemäß Figur 4 angehoben, in welcher die Frontklappe eine Fußgängerschutzposition einnimmt. Die Figur 4 zeigt das Klappenscharnier 1 in einer Sicht auf die beiden Lenkerhebel 4 und 5.

Zur Bewegung des Klappenscharniers 1 in die der Fußgängerschutzposition der Frontklappe entsprechenden Position verbleibt der zweite Lenkerhebel 5 in seiner Position und bildet mit seiner Schwenkachse 5.2 einen Drehpunkt mit dem unteren Scharnieroberteil 3.1, während der erste Lenkerhebel 4 aus seiner Position gemäß Figur 1 in die Position gemäß Figur 4 teleskopiert wird, also die beiden Teilhebel 4.1 und 4.2 auseinandergezogen werden, so dass ein weiterer Drehpunkt mittels der Schwenkachse 4.21 entsteht. Hierdurch wird eine Schwenkbewegung des oberen Scharnieroberteils 3.2 sowohl nach oben in z-Richtung als auch in x-Richtung entgegen der Fahrtrichtung initiiert, wodurch die Frontklappe die Fußgängerschutzposition erreicht. Die Auszugslänge des ersten Lenkerhebels 4 wird durch die Länge der Langlöcher 4.12 und 4.22 bestimmt.

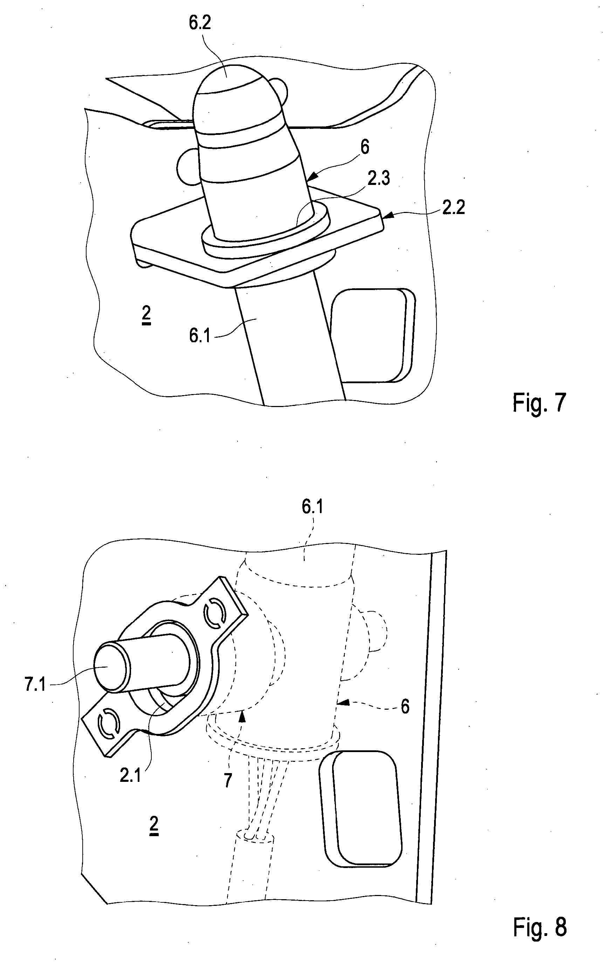

Der pyrotechnische Hubaktuator 5 besteht aus einem Aktuatorgehäuse 6.1 und einem Aktuatorstößel 6.2, wobei das Aktuatorgehäuse 6.1 am unteren Ende mit einem als Stufenbolzen ausgebildeten Lagerelement 7 verbunden ist, welches seinerseits verschiebbar in einem Langloch 2.1 des Scharnierunterteils 2 gelagert ist (vgl. Figur 8). Durch eine Aktivierung des Hubaktuators 6 wird dieser aus einem den Figuren 1 und 2 entsprechenden Passivzustand in einen Aktivzustand gemäß Figur 4 überführt, wobei der Hubaktuator 6 in diesem Aktivzustand gegenüber seinem Passivzustand eine Längenänderung zwischen dem Lagerelement 7 und dem Ende des nicht ausgefahrenen Aktuatorstößels 6.2 aufweist. Die durch das Ausfahren des Aktuatorstößels. 6.2 bewirkte Längenänderung des Hubaktuators 5 wird dazu genutzt, das Scharnieroberteil 3 in die der Fußgängerschutzposition der Frontklappe entsprechenden Position anzuheben.

Bei einer Aktivierung des Hubaktuators 5, also der Zündung von dessen Treibladung wird nicht nur der Aktuatorstößel 6.2 nach oben in Richtung des Scharnieroberteils 3 bewegt, sondern durch den mit der Zündung erzeugten Rückstoß gleichzeitig oder zeitversetzt der Hubaktuator 6 nach unten bewegt, da das untere Ende des Aktuatorgehäuses 6.1 mittels des Lagerelementes 7 in dem Langloch 2.1 des Scharnierunterteils 2 verschiebbar gelagert ist. Die Kontur des Langloches 2.1 bestimmt die Richtung und die Strecke der Rückstoßbewegung des Hubaktuators 6 während dessen Aktivierung. Um diese Rückstoßbewegung des Hubaktuators 6 zu ermöglichen, ist das zylindrische Aktuatorgehäuse 6.1 in einem Kragenloch 2.3 eines Aktuatorhalters 2.2 verschiebbar gehalten (vgl. Figur 7).

Das Lagerelement 7 ist im Passivzustand des Aktuators 5 mittels eines Federelementes 9 federvorgespannt und wird dadurch in einer Ruheposition gehalten. Durch die Rückstoßbewegung des Hubaktuators 6 wird das Lagerelement 7 gegen die Federkraft des Federelementes 9 bis an das gegenüberliegende Ende des Langloches 2.1 in eine Aktivposition verschoben. Diese Bewegung des Lagerelementes 7 zwischen dessen Ruheposition und dessen Aktivposition wird auf den mittels der Schwenkachse 5.1 in dem Scharnierunterteil 2 schwenkbar gelagerten Entriegelungshebel 8 übertragen, da ein Ende des Entriegelungshebels 8 schwenkbar auf einer von dem Lagerelement 7 gebildeten Schwenkachse 7.1 angeordnet ist (vgl. Figur 8). Somit kann der Entriegelungshebel 8 zwischen einer Ruhestellung und einer Entriegelungsstellung verschwenkt werden, wobei die Ruhestellung mit der Ruheposition des Lagerelementes 7 und die Entriegelungsstellung mit der Aktivposition des Lagerelementes 7 korrespondiert.

Das andere Ende des Entriegelungshebels 8 kommt bei einer von dem Lagerelement 7 initiierten Schwenkbewegung aus der Ruhestellung in die Entriegelungsstellung in eine Wirkverbindung mit dem Kopplungsarm 10.2 des Verriegelungselements 10, so dass durch eine Schwenkbewegung des Verriegelungselements 10 aus der Verriegelungsposition in eine Freigabeposition der Sperrzapfen 10.3 von dem Verriegelungshaken 10.1 freigegeben wird, wie dies aus Figur 4 ersichtlich ist. Bewegt sich das Lagerelement 7 aus seiner Ruheposition (vgl. Figur 1) in die Aktivposition (vgl. Figur 4) wird der Entriegelungshebel 8 in eine Drehrichtung D1 aus seiner Ruhestellung in seine Entriegelungsstellung verschwenkt. Dies bewirkt eine Drehbewegung des Verriegelungselements 10 aus seiner Verriegelungsposition in eine Drehrichtung D2 in seine Freigabeposition, da der Kopplungsarm 10.2 durch einen am Ende des Entriegelungshebels 8 angeformten Anschlag 8.1 mitgeführt wird. Damit führt die durch die Aktivierung des Hubaktuators 5 erzeugte Rückstoßbewegung zur Entriegelung der Teleskopfunktion des ersten Lenkerhebels 4.

Wie oben bereits ausgeführt dient die Aktivierung des Hubaktuators 6 nicht nur zum Entriegeln des Verriegelungselements 10, sondern hauptsächlich zum Anheben des Scharnieroberteils 3 in eine der Fußgängerschutzposition entsprechenden Stellung. Damit das Scharnieroberteil 3 in die der Fußgängerschutzposition der Frontklappe entsprechenden Position angehoben werden kann, muss die Verriegelung der Schwenkbewegung zwischen dem unteren Scharnieroberteil 3.1 und dem oberen Scharnieroberteil 3.2 durch eine Betätigung des weiteren Verriegelungselements 11 entriegelt werden.

Dieses in dem unteren Scharnieroberteil 3.1 mittels der Schwenkachse 4.21 schwenkbar angeordneten weiteren Verriegelungselement 11 umfasst einen Verriegelungshaken 11.1 sowie einen angeformten Entriegelungsarm 11.2. Mit der Aktivierung des Hubaktuators 6 trifft das freie Ende des aus dem Aktuatorgehäuse 6.1 ausfahrenden Aktuatorstößels 6.2 nach dem Überbrücken eines Abstandes zum Entriegelungsarm 11.2 auf denselben und bewirkt zunächst eine zur Entriegelung der Schwenkbewegung des oberen Scharnieroberteils 3.2 gegenüber dem unteren Scharnieroberteil 3.1 führende Schwenkbewegung und anschließend durch eine Kontaktierung des oberen Scharnieroberteils 3.2 durch den Entriegelungsarm 11.2 ein Anheben des Scharnieroberteils 3 in die der Fußgängerschutzposition der Frontklappe entsprechenden Position, wobei der erste Lenkerhebel 4 vollständig ausgezogen wird. Das Verriegelungselement 11 wird mit einem Federelement (nicht dargestellt) in seiner die Schwenkbewegung des oberen Scharnieroberteils 3.2 mit dem unteren Scharnieroberteil 3.1 verriegelnden Position vorgespannt.

Dabei ist die durch die Aktivierung des Hubaktuators 6 bewirkte Längenänderung des Hubaktuators 6 so gewählt, dass in der Aktivposition des Lagerelementes 7 das Ende des ausgefahrenen Aktuatorstößel 6.2 über den kontaktierten Entriegelungsarm 11.2 das obere Scharnieroberteil 3.2 vollständig bis in die der Fußgängerschutzposition der Frontklappe entsprechenden Position anhebt und dabei der erste Lenkerhebel 4 vollständig ausgezogen wird.

Mit dem Entriegelungsvorgang, d.h. mit dem Verschwenken des weiteren Verriegelungselements 11 wird ein Verschwenken eines mittels einer Schwenkachse 12.1 schwenkbar in dem Scharnierunterteil 2 gelagerten Sperrhakens 12 in eine das Verschwenken des zweiten Lenkerhebels 5 sperrende Position bewirkt, indem ein an dem zweiten Lenkerhebel 5 angeformter Sperrzapfen 5.3 von dem Sperrhaken 12 umgriffen wird. Diese Sperrung der Schwenkbewegung des zweiten Lenkerhebels 5 unterbleibt, wenn die Frontklappe in gebrauchsüblicher Verwendung gemäß Figur 3 geöffnet wird. Dieser Sperrhaken 12 wird in seiner nichtsperrenden Position von einem Federelement 12.2 vorgespannt.

### Bezugszeichen

- 1: Klappenscharnier
- 2: Scharnierunterteil
- 2.1: Langloch
- 2.2: Aktuatorhalter
- 2.3: Kragenloch des Aktuatorhalters 2.2
- 3: Scharnieroberteil
- 3.1: unteres Scharnieroberteil
- 3.2: oberes Scharnieroberteil
- 4: erster Lenkerhebel
- 4.1: erster Teilhebel des ersten Lenkerhebels 4
- 4.11: Schwenkachse
- 4.12: Langloch
- 4.13: Führungszapfen, Stufenniete
- 4.2: zweiter Teilhebel des ersten Lenkerhebels 4
- 4.21: Schwenkachse
- 4.22: Langloch
- 4.23: Führungszapfen, Stufenniete
- 5: zweiter Lenkerhebel
- 5.1: Schwenkachse
- 5.2: Schwenkachse
- 5.3: Sperrzapfen
- 6: Hubaktuator
- 6.1: Aktuatorgehäuse des Hubaktuators 6
- 6.2: Aktuatorstößel des Hubaktuators 6
- 7: Lagerelement
- 7.1: Schwenkachse
- 8: Entriegelungsmittel, Entriegelungshebel
- 8.1: Anschlag des Entriegelungsmittels 8
- 9: Federelement
- 10: Verriegelungselement
- 10.1: Verriegelungshaken
- 10.2: Kopplungsarm
- 10.3: Sperrzapfen
- 10.4: Federelement
- 11: weiteres Verriegelungselement
- 11.1: Verriegelungshaken des weiteren Verriegelungselements 11
- 11.2: Entriegelungsarm des weiteren Verriegelungselements 11
- 12: Sperrhaken
- 12.1: Schwenkachse
- 12.2: Federelement

## Patentansprüche

1. Klappenscharnier (1) für eine Frontklappe eines Fahrzeugs mit
- einem Scharnierunterteil (2) zur Anbindung an eine Fahrzeugkarosserie,
- einem Scharnieroberteil (3) zur Anbindung an die Frontklappe,
- einem das Scharnierunterteil (2) mit dem Scharnieroberteil (3) verbindenden ersten und zweiten Lenkerhebel (4, 5), wobei der erste Lenkerhebel (4) teleskopierbar mit einem ersten und zweiten Teilhebel (4.1, 4.2) ausgebildet ist,
- einem Verriegelungselement (10) zur Verriegelung der Teleskopfunktion des ersten Lenkerhebels (4), welches verschwenkbar zwischen einer Verriegelungsposition, in welcher der erste und zweite Teilhebel (4.1, 4.2) im nichtteleskopierten Zustand verriegelt sind, und einer das Teleskopieren des ersten und zweiten Teilhebels (4.1, 4.2) ermöglichenden Freigabeposition ausgebildet ist,
- einem Entriegelungsmittel (8) zum Verschwenken des Verriegelungselements (10) aus der Verriegelungsposition in die Freigabeposition, und
- einem Hubaktuator (6), welcher ausgebildet ist durch eine Aktivierung ein Anheben des Scharnieroberteils (3) gegenüber dem Scharnierunterteil (2) und eine Betätigung des Entriegelungsmittels (8) zu bewirken.

2. Klappenscharnier (1) nach Anspruch 1, bei welchem der erste Teilhebel (4.1) des ersten Lenkerhebels (4) und das Verriegelungselement (10) mittels einer gemeinsamen Schwenkachse (4.11) mit dem Scharnierunterteil (2) schwenkverbunden sind.

3. Klappenscharnier (1) nach Anspruch 1 oder 2, bei welchem der erste Teilhebel (4.1) als Führungsschiene mit an den Querschnitt des zweiten Teilhebels (4.2) angepassten U-förmigen Querschnitt ausgebildet ist, wobei der erste und zweite Teilhebel (4.1, 4.2) jeweils ein Langloch (4.12, 4.22) sowie einen Führungszapfen (4.13, 4.23) aufweisen, derart dass unter Führung des zweiten Teilhebels (4.2) in dem als Führungsschiene ausgebildeten ersten Teilhebel (4.1) jeweils wechselseitig ein Führungszapfen (4.13, 4.23) in ein Langloch (4.12, 4.22) eingreift.

4. Klappenscharnier (1) nach einem der vorhergehenden Ansprüche, bei welchem das Entriegelungsmittel (8) als in dem Scharnierunterteil (2) schwenkbar zwischen einer federvorgespannten Ruhestellung und einer Entriegelungsstellung gelagerten Entriegelungshebel ausgebildet ist, welcher mit einem Ende derart mit dem Verriegelungselement (10) wirkverbunden ist, dass beim Verschwenken aus der Ruhelage in die Entriegelungsstellung das Verriegelungselement (10) aus der Verriegelungsposition in die Freigabeposition verschwenkt wird.

5. Klappenscharnier (1) nach einem der vorhergehenden Ansprüche, bei welchem das Verriegelungselement (10) ein Verriegelungshebel ist, welcher einenends mit einem Verriegelungshaken (10.1) und andernends mit einem Kopplungsarm (10.2) zur Herstellung der Wirkverbindung mit dem Entriegelungsmittel (8) ausgebildet ist, wobei zur Verriegelung der Teleskopfunktion des ersten Lenkerhebels (4) dessen zweiter Teilhebel (4.2) einen mit dem Verriegelungshaken (10.1) in Wirkverbindung bringbaren Sperrzapfen (10.3) aufweist.

6. Klappenscharnier (1) nach Anspruch 4 oder 5, bei welchem der Hubaktuator (6) derart mit dem anderen Ende des Entriegelungshebels (8) wirkverbunden ist, dass durch die Aktivierung des Hubaktuators (6) der Entriegelungshebel (8) aus der Ruhestellung in die Entriegelungsstellung verschwenkt wird.

7. Klappenscharnier (1) nach einem der Ansprüche 4 bis 6, bei welchem die Wirkverbindung zwischen dem Hubaktuator (6) und dem Entriegelungshebel (8) mittels eines in dem Scharnierunterteil (2) aus einer federvorgespannten Ruheposition gegen die Federspannung in eine Aktivposition verschiebbar gelagerten Lagerelementes (7) hergestellt ist, wobei die Ruheposition mit der Ruhestellung des Entriegelungshebels (8) und die Aktivposition mit der Entriegelungsstellung des Entriegelungshebels (8) korrespondiert.

8. Klappenscharnier (1) nach Anspruch 7, bei welchem das Scharnierunterteil (2) ein Langloch (2.1) aufweist, in welchem das Lagerelement (7) zwischen der Ruheposition und der Aktivposition verschiebbar gelagert ist.

9. Klappenscharnier (1) nach einem der vorhergehenden Ansprüche, bei welchem der Hubaktuator (6) in einem Aktuatorhalter (2.2) verschiebbar gelagert ist, wobei der Aktuatorhalter (2.2) an dem Scharnierunterteil (2) angeordnet ist.

10. Klappenscharnier (1) nach einem der vorhergehenden Ansprüche, bei welchem der Hubaktuator (6) aus einem Aktuatorgehäuse (6.1) mit einem aus dem Aktuatorgehäuse (6.1) ausfahrbaren Aktuatorstößel (6.2) ausgebildet ist.

11. Klappenscharnier (1) nach Anspruch 10, bei welchem das Aktuatorgehäuse (6.1) des Hubaktuators (6) mit dem Lagerelement (7) verbunden ist.

12. Klappenscharnier (1) nach einem der vorhergehenden Ansprüche, bei welchem der Hubaktuator (6) als pyrotechnischer Aktor ausgebildet ist.

## Claims

1. Bonnet hinge (1) for a bonnet of a vehicle comprising
- a hinge lower part (2) for connection to a vehicle body,
- a hinge upper part (3) for connection to the bonnet,
- a first and second link lever (4, 5) connecting the hinge lower part (2) to the hinge upper part (3), wherein the first link lever (4) is telescopically formed with a first and second part lever (4.1, 4.2),
- a locking element (10) for locking the telescopic function of the first link lever (4), which is pivotable between a locking position in which the first and second part lever (4.1, 4.2) are locked in the non-telescoped state, and a release position enabling the telescoping of the first and second part lever (4.1, 4.2),
- an unlocking means (8) for pivoting the locking element (10) from the locking position into the release position, and
- a lifting actuator (6) which is formed to effect a raising of the hinge upper part (3) relative to the hinge lower part (2) when activated and to effect an actuation of the unlocking means (8).

2. Bonnet hinge (1) according to claim 1, wherein the first part lever (4.1) of the first link lever (4) and the locking element (10) are pivotably connected to the hinge lower part (2) by means of a common pivot axis (4.11).

3. Bonnet hinge (1) according to claim 1 or 2, wherein the first part lever (4.1) is designed as a guide rail having a U-shaped cross-section adapted to the cross section of the second part lever (4.2), wherein the first and second part lever (4.1, 4.2) respectively have a slot (4.12, 4.22) and a guide pin (4.13, 4.23), such that, guided by the second part lever (4.2) in the first part lever (4.1) designed as a guide rail, a guide pin (4.13, 4.23) respectively mutually engages in a slot (4.12, 4.22).

4. Bonnet hinge (1) according to any one of the preceding claims, wherein the unlocking means (8) is pivotably formed as a release lever mounted in the hinge lower part (2) pivotable between a spring biased rest position and an unlocking position, said unlocking lever being operatively connected with one end to the locking element (10) such that, when pivoting out of the rest position into the unlocking position, the locking element (10) is pivoted out of the locking position into the release position.

5. Bonnet hinge (1) according to any one of the preceding claims, in which the locking element (10) is a locking lever which is formed at one end with a locking hook (10.1) and at the other end with a coupling arm (10.2) for establishing the operative connection to the unlocking means (8), wherein for locking the telescopic function of the first link lever (4) the second part lever (4.2) has a locking pin (10.3) which can be brought into operative connection with the locking hook (10.1).

6. Bonnet hinge (1) according to claim 4 or 5, wherein the lifting actuator (6) is operatively connected to the other end of the unlocking lever (8) such that by activating the lifting actuator (6) the unlocking lever (8) is pivoted from the rest position into the unlocking position.

7. Bonnet hinge (1) according to any one of claims 4 to 6, wherein the operative connection between the lifting actuator (6) and the unlocking lever (8) is made by means of a bearing element (7) mounted in the hinge lower part (2) and displaceable from a spring biased resting position against the spring tension into an active position, wherein the resting position corresponds to the rest position of the unlocking lever (8) and the active position corresponds to the unlocking position of the unlocking lever (8).

8. Bonnet hinge (1) according to claim 7, wherein the hinge lower part (2) has a slot (2.1) in which the bearing element (7) is displaceably mounted between the resting position and the active position.

9. Bonnet hinge (1) according to any one of the preceding claims, wherein the lifting actuator (6) is displaceably mounted in an actuator holder (2.2), wherein the actuator holder (2.2) is arranged on the hinge lower part (2).

10. Bonnet hinge (1) according to any one of the preceding claims, wherein the lifting actuator (6) is formed from an actuator housing (6.1) having an actuator tappet (6.2) which can be extended from the actuator housing (6.1).

11. Bonnet hinge (1) according to claim 10, wherein the actuator housing (6.1) of the lifting actuator (6) is connected with the bearing element (7).

12. Bonnet hinge (1) according to any one of the preceding claims, wherein the lifting actuator (6) is designed as a pyrotechnic actuator.

## Revendications

1. Charnière d'ouvrant (1) pour un capot d'un véhicule avec
- une partie inférieure de charnière (2) pour la liaison à une carrosserie de véhicule,
- une partie supérieure de charnière (3) pour la liaison au capot,
- un premier et deuxième levier à bras (4, 5) reliant la partie inférieure de charnière (2) à la partie supérieure de charnière (3), dans laquelle le premier levier à bras (4) est réalisé de manière télescopique avec un premier et deuxième levier partiel (4.1, 4.2),
- un élément de verrouillage (10) pour le verrouillage de la fonction télescopique du premier levier à bras (4), lequel est réalisé de manière pivotante entre une position de verrouillage, dans laquelle le premier et deuxième levier partiel (4.1, 4.2) sont verrouillés à l'état non télescopique, et une position de libération permettant le télescopage du premier et deuxième levier partiel (4.1, 4.2),
- un moyen de déverrouillage (8) pour le pivotement de l'élément de verrouillage (10) de la position de verrouillage à la position de libération, et
- un actionneur de levage (6), lequel est réalisé pour provoquer par une activation un soulèvement de la partie supérieure de charnière (3) par rapport à la partie inférieure de charnière (2) et un actionnement du moyen de déverrouillage (8).

2. Charnière d'ouvrant (1) selon la revendication 1, dans laquelle le premier levier partiel (4.1) du premier levier à bras (4) et l'élément de verrouillage (10) sont reliés par pivotement à la partie inférieure de charnière (2) au moyen d'un axe de pivotement commun (4.11).

3. Charnière d'ouvrant (1) selon la revendication 1 ou 2, dans laquelle le premier levier partiel (4.1) est réalisé en tant que rail de guidage avec une section transversale en forme de U adaptée à la section transversale du deuxième levier partiel (4.2), dans laquelle le premier et deuxième levier partiel (4.1, 4.2) présentent respectivement un trou oblong (4.12, 4.22) ainsi qu'un tenon de guidage (4.13, 4.23) de sorte que sous le guidage du deuxième levier partiel (4.2) dans le premier levier partiel (4.1) réalisé en tant que rail de guidage respectivement réciproquement un tenon de guidage (4.13, 4.23) vient en prise dans un trou oblong (4.12, 4.22).

4. Charnière d'ouvrant (1) selon l'une quelconque des revendications précédentes, dans laquelle le moyen de déverrouillage (8) est réalisé en tant que levier de déverrouillage logé de manière pivotante dans la partie inférieure de charnière (2) entre une position de repos précontrainte par ressort et une position de déverrouillage, lequel est relié activement avec une extrémité à l'élément de verrouillage (10) de sorte que lors du pivotement de la position de repos à la position de déverrouillage, l'élément de verrouillage (10) est pivoté de la position de verrouillage à la position de libération.

5. Charnière d'ouvrant (1) selon l'une quelconque des revendications précédentes, dans laquelle l'élément de verrouillage (10) est un levier de verrouillage, lequel est réalisé à une extrémité avec un crochet de verrouillage (10.1) et à l'autre extrémité avec un bras de couplage (10.2) pour l'établissement de la liaison active avec le moyen de déverrouillage (8), dans laquelle pour le verrouillage de la fonction télescopique du premier levier à bras (4) son deuxième levier partiel (4.2) présente un tenon de blocage (10.3) pouvant être amené en liaison active avec le crochet de verrouillage (10.1).

6. Charnière d'ouvrant (1) selon la revendication 4 ou 5, dans laquelle l'actionneur de levage (6) est relié activement à l'autre extrémité du levier de déverrouillage (8) de sorte que par l'activation de l'actionneur de levage (6), le levier de déverrouillage (8) est pivoté de la position de repos à la position de déverrouillage.

7. Charnière d'ouvrant (1) selon l'une quelconque des revendications 4 à 6, dans laquelle la liaison active entre l'actionneur de levage (6) et le levier de déverrouillage (8) est établie au moyen d'un élément de palier (7) logé de manière coulissante dans la partie inférieure de charnière (2) d'une position de repos précontrainte par ressort contre la tension du ressort à une position active, dans laquelle la position de repos correspond à la position de repos du levier de déverrouillage (8) et la position active correspond à la position de déverrouillage du levier de déverrouillage (8).

8. Charnière d'ouvrant (1) selon la revendication 7, dans laquelle la partie inférieure de charnière (2) présente un trou oblong (2.1), dans lequel l'élément de palier (7) est logé de manière coulissante entre la position de repos et la position active.

9. Charnière d'ouvrant (1) selon l'une quelconque des revendications précédentes, dans laquelle l'actionneur de levage (6) est logé de manière coulissante dans un support d'actionneur (2.2), dans laquelle le support d'actionneur (2.2) est agencé au niveau de la partie inférieure de charnière (2).

10. Charnière d'ouvrant (1) selon l'une quelconque des revendications précédentes, dans laquelle l'actionneur de levage (6) est formé d'un boîtier d'actionneur (6.1) avec un poussoir d'actionneur (6.2) déployable hors du boîtier d'actionneur (6.1).

11. Charnière d'ouvrant (1) selon la revendication 10, dans laquelle le boîtier d'actionneur (6.1) de l'actionneur de levage (6) est relié à l'élément de palier (7).

12. Charnière d'ouvrant (1) selon l'une quelconque des revendications précédentes, dans laquelle l'actionneur de levage (6) est réalisé en tant qu'actionneur pyrotechnique.
